# EUROPÄISCHE PATENTSCHRIFT

(11) **EP 0 994 159 B1**
(45) Veröffentlichungstag und Bekanntmachung des Hinweises auf die Patenterteilung: **04.04.2001**
(21) Anmeldenummer: 99117453.3
(22) Anmeldetag: 09.09.1999
(51) Int. Cl.: C08L 83/07, C08K 5/00, C07F 15/00

(54) **Härtbare Organopolysiloxanmassen**
Curable organopolysiloxane composition
Composition d'organopolysiloxane durcissable

(30) Priorität: 13.10.1998 DE 19847097
(43) Veröffentlichungstag der Anmeldung: 19.04.2000
(73) Patentinhaber: Wacker-Chemie GmbH, 81737 München (DE)
(72) Erfinder: Fehn, Armin, Dr., 84547 Emmerting (DE); Achenbach, Frank, Dr., 84359 Simbach/Inn (DE)
(74) Vertreter: Budczinski, Angelika

(56) Entgegenhaltungen:
- EP-A- 0 173 512
- EP-A- 0 638 604
- DE-A- 4 429 411
- US-A- 5 328 974
- US-A- 5 525 564

## Beschreibung

Die vorliegende Erfindung betrifft thermisch durch Hydrosilylierung vernetzende Siliconmassen, Verfahren zu deren Herstellung, hierzu eingesetzte Platinkatalysatoren sowie die Verwendung der vernetzbaren Massen.

Additionsvernetzende Siliconmassen vernetzen durch Reaktion aliphatisch ungesättigter Gruppen mit Si-gebundenem Wasserstoff (Hydrosilylierung) in Gegenwart eines Katalysators, typischerweise einer Platin-Verbindung. Aufgrund der Tatsache, daß bei gleichzeitigem Vorliegen der essentiellen Bestandteile die Vernetzungsreaktion einsetzt, werden additionsvernetzende Siliconmassen bisher nahezu ausschließlich als zweikomponentige Formulierungen, hergestellt, wobei die Zusammensetzung der einzelnen Komponenten so beschaffen ist, daß erst nach deren Vermischen alle drei essentiellen Bestandteile zusammen vorliegen. Üblicherweise enthält eine der Komponenten das alkenylfunktionelle Polyorganosiloxan und den Platin-Katalysator, die andere Komponente den SiH-funktionellen Vernetzer ggf. in Kombination mit dem alkenylfunktionellen Polyorganosiloxan. Nach Vermischen der einzelnen Komponenten kann die vollständige Aushärtung zum Siliconelastomer bei Raumtemperatur erfolgen, wird jedoch üblicherweise bei erhöhter Temperatur durchgeführt.

Das Zwei-Komponenten-System bei additionsvernetzbaren Siliconmassen ist mit zahlreichen Nachteilen verbunden, wie etwa Logistik, die hohe Kontaminationsgefahr durch Platinspuren und die Tatsache eines zusätzlichen Mischungsschrittes. Nach Vermischen der Komponenten wird zwar eine gebrauchsfertige Masse erhalten, doch weist diese nur eine eng begrenzte Topfzeit bei Raumtemperatur auf. Dies macht einerseits eine sich rasch anschließende Verarbeitung erforderlich, andererseits auch ein häufiges Reinigen der Vorratsbehälter, Dosieranlagen, Verarbeitungsmaschinen etc., da das z.B. durch Rückvermischung oder Wandhaftung verbleibende Material schließlich vergelt.

Aufgrund der genannten Nachteile hat es nicht an Versuchen gefehlt, auch additionsvernetzende Siliconmassen als einkomponentige Formulierung (1K-System) zur Verfügung zu stellen. Da im Fall eines 1K-Systems alle zur Vernetzung notwendigen Bestandteile gemeinsam vorliegen, besteht das Problem grundsätzlich darin, ein vorzeitiges Einsetzen der Vernetzungsreaktion, die normalerweise auch bei Raumtemperatur abläuft, anderweitig zu unterbinden. Möglichkeiten zur gezielten Einstellung (Verlängerung) der Topfzeit einer additionsvernetzenden Masse sind hinlänglich bekannt, z.B. durch die Verwendung von Inhibitoren, welche die Aktivität des Platinkatalysators bei Raumtemperatur erheblich herabzusetzen vermögen, wie beispielsweise Phosphorverbindungen in Kombination mit Peroxiden gemäß US-A-4 329 275 oder Azodicarbonylverbindungen gemäß EP-A-490 523. Durch Art und Gehalt solcher Inhibitoren kann die Topfzeit zwar an sich beliebig verlängert werden, doch ist mit zunehmender Topfzeit auch eine nachteilige Beeinflussung des Vernetzungsverhaltens untrennbar verbunden. Dies gilt insbesondere dann, wenn die Topfzeit durch hohe Inhibitorgehalte auf mehrere Monate ausgedehnt wird: erhöhte Anspringtemperatur, niedrige Vernetzungsgeschwindigkeit bis hin zur Untervernetzung sind die Folge.
Eine davon grundsätzlich verschiedene, weitere Möglichkeit besteht darin, den Platinkatalysator in einem feinteiligen Material zu verkapseln, welches erst bei erhöhter Temperatur das Platin freisetzt. Dies kann beispielsweise durch Mikroverkapselung des Platinkatalysators mit einem thermoplatischen Siliconharz oder einem organischen Thermoplast erfolgen, wie etwa in EP-A-363 006 beschrieben, was jedoch relativ aufwendig ist. Eine dritte Möglichkeit besteht darin, als Katalysator spezielle Platin-Komplexe auszuwählen, deren Aktivität so beschaffen ist, daß zwar bei erhöhter Temperatur die Hydrosilylierungsreaktion hinreichend schnell abläuft, bei Raumtemperatur jedoch in solch geringem Maße, daß Topfzeiten von mehreren Monaten erzielt werden. Derartige Platin-Komplexe enthaltende additionsvernetzende Massen wurden beispielsweise in EP-A-583 159 und DE-A-36 35 236 beschrieben. Obgleich die beschriebenen Massen deutlich verbesserte Topfzeiten bei teils hinreichend hohen Vernetzungsgeschwindigkeiten aufweisen, besteht weiterhin Bedarf, durch leistungsfähigere Platinkatalysatoren die Topfzeit und Vernetzungsgeschwindigkeit einkomponentig formulierter, additionsvernetzender Massen zu verbessern, ohne die o.g. Nachteile in Kauf nehmen zu müssen. Diese Aufgabe wird durch die vorliegende Erfindung gelöst.

Im Rahmen der vorliegenden Erfindung sollen von dem Begriff Organopolysiloxane sowohl polymere, oligomere wie auch dimere Siloxane mitumfaßt werden.

Gegenstand der vorliegenden Erfindung sind härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si- gebundene Wasserstoffatome aufweisen, und
(D) Platinkatalysator, ausgewählt aus der Gruppe bestehend aus 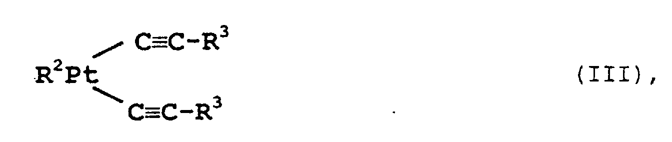 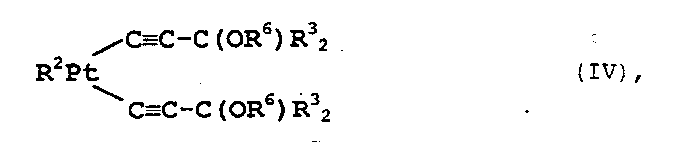 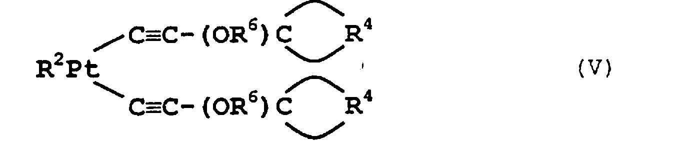 und

   H-C≡C-(R⁵)_{f}-C≡C-[-Pt(R²)-C≡C-(R⁵)_{f}-C≡C-]ₑ-H (VI),

   wobei
   - R²: ein gegebenenfalls substituiertes Dien bedeutet, das durch mindestens eine π-Bindung mit Platin verbunden ist und eine unverzweigte oder eine verzweigte Kette mit 4 bis 12 Kohlenstoffatomen oder einen cyclischen Ring mit 6 bis 18 Kohlenstoffatomen darstellt,
   - R³: gleich oder verschieden sein kann und Wasserstoffatom, Halogenatom oder einwertige, gegebenenfalls mit Halogenatomen oder Cyanoresten substituierte Kohlenwasserstoffreste mit 1 bis 24 Kohlenstoffatomen bedeutet,
   - R⁴: gleiche oder verschiedene zweiwertige, gegebenenfalls substituierte Kohlenwasserstoffreste mit 1 bis 24 Kohlenstoffatomen bedeutet,
   - R⁵: gleich oder verschieden sein kann und zweiwertige, gegebenenfalls substituierte Kohlenwasserstoffreste mit 1 bis 12 Kohlenstoffatomen, Silanreste oder Siloxanreste bedeutet,
   - R⁶: gleich oder verschieden sein kann und Wasserstoffatom oder einen einwertigen Kohlenwasserstoffrest mit 1 bis 20 Kohlenstoffatomen ist,
   - e: eine ganze Zahl größer oder gleich 1 bedeutet und
   - f: 0 oder 1 ist.

Falls es sich bei R² um ein substituiertes Dien bzw. bei den Resten R⁴ und R⁵ um substituierte Kohlenwasserstoffreste handelt, sind als Substituenten Halogenatome, wie F, Cl, Br und J, Cyanoreste, -NR⁶₂ sowie Gruppen -OR⁶ bevorzugt, wobei R⁶ die oben genannte Bedeutung hat.

Bei den erfindungsgemäßen Zusammensetzungen kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im allgemeinen mit der Maßgabe, daß eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (A), (B) und (D) bzw. (C) und (D), enthält. Vorzugsweise handelt es sich bei den erfindungsgemäßen Zusammensetzungen um Einkomponenten-Massen.

Die in den erfindungsgemäßen Massen eingesetzten Verbindungen (A) und (B) bzw. (C) werden bekanntermaßen so gewählt, daß eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Bei der erfindungsgemäß eingesetzten Verbindung (A) kann es sich um auch siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4, 7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien(1,7), N,N'-Methylen-bis- (acrylsäureamid), 1,1,1-Tris (hydroxymethyl)-propan-triacrylat, 1,1,1-Tris (hydroxymethyl) -propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly- (propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindung (A), die SiC-gebundene Reste mit aliphatischen Kohlenstoff-Kohlenstoff-Mehrfachbindungen aufweist, werden vorzugsweise lineare oder verzweigte Organopolysiloxane aus Einheiten der Formel

RₐR¹ _{b}SiO_{(4-a-b) /2} (I)

eingesetzt, wobei
**R** gleich oder verschieden sein kann und einen von aliphatischen Kohlenstoff-Kohlenstoff-Mehrfachbindungen freien, organischen Rest bedeutet,
**R**^{**1**} gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a** 0, 1, 2 oder 3 ist und
**b** 0, 1 oder 2 ist
mit der Maßgabe, daß die Summe a + b kleiner oder gleich 3 ist und mindestens 2 Reste R¹ je Molekül vorliegen.

Bei Rest **R** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfaßt die einwertigen Reste -F, -Cl, -Br, -OR⁶, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste.

Falls es sich bei Rest R um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)-R⁶, -C(O)OR⁶, -SO₂-Ph und -C₆F₅ mit R⁶ gleich der obengenannten Bedeutung und Ph gleich Phenylrest bevorzugt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der ß-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, - (CH₂)ₙ-N(R⁶)C(O)NR⁶₂, - (CH₂)ₙ-C(O)NR⁶₂, - (CH₂)ₙ-C(O)R⁶, - (CH₂)ₙ-C(O)OR⁶, - (CH₂)ₙ-C(O)NR⁶₂, -(CH₂)ₙ-C(O) - (CH₂)ₘ-C(O)CH₃, - (CH₂)ₙ-O-CO-R⁶, - (CH₂)ₙ-NR⁶- (CH₂)ₘ-NR⁶₂, - (CH₂)ₙ-O-(CH₂)ₘ-CH (OH) -CH₂OH, - (CH₂)ₙ- (OCH₂CH₂)ₘ-OR⁶, - (CH₂)ₙ-SO₂-Ph und - (CH₂)ₙ-O-C₆F₅, wobei R⁶ eine oben dafür angegebene Bedeutung hat, n und m gleiche oder verschiedene ganze Zahlen zwischen 0 und 10 sind und Ph den Phenylrest bezeichnet.

Beispiele für R gleich zweiwertige, beidseitig gemäß Formel (I) Si-gebundene Reste sind solche, die sich von den voranstehend für Rest R genannten einwertigen Beispiele dadurch ableiten, daß eine zusätzliche Bindung durch Substitution eines Wasserstoffatoms erfolgt. Beispiele für derartige Reste sind - (CH₂)ₙ-, -CH(CH₃)-, -C(CH₃)₂-, -CH (CH₃)-CH₂-, -C₆H₄-, -CH (Ph) -CH₂-, -C(CF₃)₂-, - (CH₂)ₙ-C₆H₄-(CH₂)ₙ-, - (CH₂)ₙ-C₆H₄-C₆H₄-(CH₂)ₙ-, - (CH₂O)ₘ-, - (CH₂CH₂O)ₘ-, - (CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R**^{**1**} kann es sich um beliebige, einer Anlagerungsreaktion (Hydrosilylierung) mit einer SiH-funktionellen Verbindung zugängliche Gruppen handeln.

Falls es sich bei Rest **R**^{**1**} um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der Formel

R_{c}H_{d}SiO_{(4-c-d)/2} (II)

eingesetzt, wobei
**R** gleich oder verschieden sein kann und die oben angegebene Bedeutung hat,
**c** 0, 1, 2 oder 3 ist und
**d** 0, 1 oder 2 ist,
mit der Maßgabe, daß die Summe von c + d kleiner oder gleich 3 ist und mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, daß das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{f}SiO_{4-f/2} , R_{g}R¹SiO_{3-g/2} und RₕHSiO_{3-h/2} ,

wobei
R und R¹ die oben dafür angegebene Bedeutung haben,
f 0, 1, 2 oder 3 ist,
g 0, 1 oder 2 ist und
h 0, 1 oder 2 ist,
mit der Maßgabe, daß je Molekül mindestens 2 Reste R¹ und mindestens 2 Si-gebundene Wasserstoffatome vorliegen.

Beispiele für Organopolysiloxane (C) sind solche aus SiO_{4/2}-, R₃SiO_{1/2}-, R₂R¹SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R¹SiO_{1/2}-, R₂SiO- und RHSiO-Einheiten mit R und R¹ gleich der obengenannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C.

Organopolysiloxane (C) sind nach in der Chemie gängigen Methoden herstellbar.

Bevorzugt handelt es sich bei e um eine ganze Zahl von 1 bis 50, wobei eine ganze Zahl von 1 bis 10 besonders bevorzugt ist.

Beispiele für **R**^{**2**} sind Diene, wie 1,3-Butadien, 1,4-Diphenyl-1,3-butadien, 1,3-Cyclohexadien, 1,4-Cyclohexadien, 2,4-Hexadien, 1,4-Hexadien, 1,5-Hexadien, 2,5-Dimethyl-2,4-Hexadien, α- und γ-Terpinen, (R) - (+)-4-Isopropenyl-1-methyl-1-cyclohexen, (S)-(-)-4-Isopropenyl-1-methyl-1-cyclohexen, 4-Vinyl-1-cyclohexen, 2,5-Heptadien, 1,5-Cyclooctadien, 1-Chlor-1,5-Cyclooctadien, 1,5-Dimethyl-1,5-cyclooctadien, 1,6-Dimethyl-1,5-cyclooctadien, 1,5-Dichlor-l,5-cyclooctadien, 5,8-Dihydro-1,4-dioxocin, η⁴-1,3,5,7-Cyclooctatetraen, η⁴-1,3,5-Cycloheptatrien, η⁴-1-Fluor-1,3,5,7-Cyclooctatetraen, η⁴-1,2,4,7-Tetramethyl-1,3,5,7-cyclooctatetraen, 1,3-Dodecadien, Methylcyclopentadien dimer, 4,7-Methylen-4,7,8,9-tetrahydroinden, Bicyclo[4.2.2]deca-3,9-dien-7,8-dicarbonsäureanhydrid, Bicyclo[4.2.2]deca-3,9-dien-7,8-dicarbonsäurealkylester und Bicyclo[4.2.2]deca-3,7,9-trien-7,8-dicarbonsäurealkylester.

Bevorzugt handelt es sich bei Rest **R**^{**2**} um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 4-Vinyl-1-cyclohexen, und η⁴-1,3,5,7-Cyclooctatetraen, wobei 1,5-Cyclooctadien, 1,5-Dimethyl-1,5-cyclooctadien, 1,6-Dimethyl-1,5-Cyclooctadien besonders bevorzugt sind.

Beispiele für **R**^{**3**} sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest, sowie Reste der Formel -C(R⁷)=CR⁷₂, wobei R⁷ gleich oder verschieden sein kann und Wasserstoffatom, Halogenatom oder einwertige, gegebenenfalls mit Halogenatomen oder Cyanoresten substituierte Kohlenwasserstoffreste mit 1 bis 21 Kohlenstoffatomen bedeutet, wie Alkylreste mit 1 bis 12 Kohlenstoffatomen, Alkenylreste, Arylreste und Aralkylreste.

Beispiele für halogenierte Reste R³ sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest.

Bevorzugt handelt es sich bei Rest **R**^{**3**} um Wasserstoffatom und Kohlenwasserstoffreste mit 1 bis 8 Kohlenstoffatomen, wobei Methyl-, Ethyl-, Cyclohexyl- und Phenylreste besonders bevorzugt sind.

Bevorzugt handelt es sich bei Rest **R**^{**4**} um zweiwertige Kohlenwasserstoffreste mit 1 bis 12 Kohlenstoffatomen, wie z.B. -CH₂-, -C₂H₄-, -C₄H₈-, -C₅H₁₀- und -C₈H₁₆-, wobei -C₅H₁₀- besonders bevorzugt ist.

Bevorzugt handelt es sich bei Rest **R**^{**5**} um -CH₂-, -C₂H₄-, -C₃H₆-, -C₄H₈-, -C₅H₁₀-, -C₆H₄-, -C₈H₁₆-, -CH₂-N(H)-CH₂-, -CH₂-O-CH₂-, -Si(CH₃)₂-, -Si(CH₃)₂[-O-Si(CH₃)₂]ₚ- und -C₆H₄-Si (CH₃)₂[-O-Si(CH₃)₂]ₚ-C₆H₄-, wobei p gleiche oder verschiedene ganze Zahlen von 1 bis 6000 sind.

Bevorzugt handelt es sich bei **R**^{**6**} um Wasserstoffatom, Alkylreste und Arylreste, wobei Wasserstoffatom, der Methyl- und der Ethylrest besonders bevorzugt sind.

Bis(alkinyl) (η-olefin)platin-Verbindungen und Verfahren zu ihrer Herstellung sind dem Fachmann zu einem kleinen Teil bekannt. Hierzu sei beispielsweise auf J. Chem.Soc., Dalton Trans. (1986) 1987-92 und Organometallics (1992) **11** 2873-2883 verwiesen.

Bei dem erfindungsgemäß eingesetzten Platinkatalysator (D) handelt es sich bevorzugt um Bis(alkinyl) (1,5-cyclooctadien)platin-, Bis (alkinyl) (1, 5-dimethyl-1, 5-cyclooctadien)platin- und Bis(alkinyl)(1,6-dimethyl-1,5-cyclooctadien)platin-Komplexe.

Ein weiterer Gegenstand der vorliegenden Erfindung sind Platin-katalysatoren der Formel (III) mit R² gleich 1,5-Cyclooctadien, 1,5-Dimethyl-1,5-Cyclooctadien oder 1,6-Dimethyl-1,5-Cyclooctadien, mit der Maßgabe, daß im Fall von R² gleich 1,5-Cyclooctadien R³ die Bedeutung von -C(R⁷)=CR⁷₂ mit R⁷ gleich der obengenannten Bedeutung hat.

Ein weiterer Gegenstand der vorliegenden Erfindung sind Platin-katalysatoren der Formeln (IV), (V) und (VI) mit R² gleich 1,5-Cyclooctadien, 1,5-Dimethyl-1,5-Cyclooctadien oder 1,6-Dimethyl-1,5-Cyclooctadien.

Die Menge des erfindungsgemäß eingesetzten Platinkatalysators (D) richtet sich nach der gewünschten Vernetzungsgeschwindigkeit und der jeweiligen Verwendung sowie ökonomischen Gesichtspunkten. Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäße Siliconkautschukmasse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so daß sie individuell bestimmt werden muß.

Der Inhibitorgehalt der erfindungsgemäßen Massen beträgt vorzugsweise 0 bis 50 000 ppm, besonders bevorzugt 50 bis 2000 ppm, insbesondere 100 bis 800 ppm.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten, oder die erfindungsgemäß eingesetzten Komponenten D und B sind getrennt in verschiedenen Granulatteilchen eingearbeitet. Hinsichtlich der elastomeren Eigenschaften der vernetzten erfindungsgemäßen Siliconmassen wird gleichfalls das gesamte Spektrum umfaßt, beginnend bei extrem weichen Silicongelen, über gummiartige Materialien bis hin zu hochvernetzten Siliconen mit glasartigem Verhalten.

Die Herstellung der erfindungsgemäßen Organopolysiloxanmassen kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des Platinkatalysators (D) mit einer Mischung aus (A), (B), gegebenenfalls (E), (F) und (G). Der erfindungsgemäß eingesetzte Platinkatalysator (D) kann dabei als Festsubstanz oder als Lösung - in einem geeigneten Lösungsmittel gelöst - oder als sog. Batch - gleichmäßig mit einer geringen Menge (A) oder (A) mit (E) vermischt - eingearbeitet werden.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Ein weiterer Gegenstand der vorliegenden Erfindung sind Formkörper hergestellt durch Vernetzung der erfindungsgemäßen Massen.

Die erfindungsgemäßen Massen sowie die erfindungsgemäß daraus. hergestellten Vernetzungsprodukte können für alle Zwecke eingesetzt werden, für die auch bisher zu Elastomeren vernetzbare Organopolysiloxanmassen bzw. Elastomere verwendet wurden. Dies umfaßt beispielsweise die Siliconbeschichtung bzw. Imprägnierung beliebiger Substrate, die Herstellung von Formteilen, z.B. im Spritzgußverfahren, Vakuumextrusionsverfahren, Extrusionsverfahren, Formgießen und Formpressen, und Abformungen, die Verwendung als Dicht- Einbett- und Vergußmassen usw.

Die erfindungsgemäßen vernetzbaren Massen haben den Vorteil, daß sie in einem einfachen Verfahren unter Verwendung leicht zugänglicher Ausgangsstoffe und damit wirtschaftlich hergestellt werden können.

Die erfindungsgemäßen vernetzbaren Massen haben den Vorteil, daß sie als einkomponentige Formulierung bei 25°C und Umgebungsdruck eine gute Lagerstabilität aufweisen und erst bei erhöhter Temperatur rasch vernetzen.

Die erfindungsgemäßen Siliconmassen haben den Vorteil, daß diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt (extrem lange Topfzeit) und erst bei erhöhter Temperatur rasch vernetzt.

Bei der Herstellung der erfindungsgemäßen vernetzbaren Massen ist es von großem Vorteil, daß sich der Platinkatalysator (D) leicht einarbeiten läßt.

Die erfindungsgemäßen Massen haben des weiteren den Vorteil, daß die vernetzten Siliconkautschuke eine ausgezeichnete Durchsichtigkeit aufweisen.

Die erfindungsgemäßen Massen haben ferner den Vorteil, daß die Hydroslilylierungsreaktion sich nicht mit der Reaktionsdauer verlangsamt.

Die erfindungsgemäßen Platin-Komplexe sind nützlich als Katalysatoren für die wohlbekannte Hydrosilylierungsreaktion in der Organosiliciumchemie, als Katalysator für die Hydrierung ungesättigter organischer Verbindungen oder Polymere und zur Oligomerisierung von Acetylen und anderen Alkinen.

Die erfindungsgemäßen Platin-Katalysatoren haben des weiteren den Vorteil, daß endständige Doppelbindungen bei der Hydrosilylierung nicht nach innen umlagern, wodurch schwachreaktives isomerisiertes Ausgangsprodukt verbliebe.

Die erfindungsgemäßen Platin-Katalysatoren haben ferner den Vorteil, daß keine Platin-Kolloide gebildet werden und durch ihren Einsatz keine Verfärbungen resultieren.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

COD bedeutet Cycloocta-1,5-dien, Me₂COD bedeutet ein Gemisch aus 1,5-Dimethylcycloocta-1,5-dien und 1,6-Dimethylcycloocta-1,5-dien, Vi bedeutet Vinylrest, Me bedeutet Methylrest, ^{t}Bu bedeutet tert.-Butylrest und Ph bedeutet Phenylrest.

### Herstellung des Katalysators 1

Eine Suspension von 0,5 g [PtCl₂(COD)] in 30 ml Ethanol wurde unter Stickstoff auf 0°C gekühlt. Anschließend wurde eine frisch hergestellte Lösung von 0,27 g Phenylacetylen und Natriumethanolat (hergestellt aus 61,5 mg Natrium und 10 ml Ethanol) langsam zugetropft. Nach circa 50 Minuten wurde der Niederschlag abfiltriert und dreimal aus Dichlormethan umkristallisiert. Es wurden 0,614 g eines Platinkomplexes der nachfolgenden Formel erhalten:

[(COD)Pt(C≡C-Ph)₂]

### Herstellung des Katalysators 2

Eine Suspension von 0,6 g [PtCl₂(COD)] in 10 ml Ethanol wurde unter Stickstoff auf 0°C gekühlt. Anschließend wurde eine frisch hergestellte Lösung von 0,28 g ^{t}Bu-C≡C-H und Natriumethanolat (hergestellt aus 0,07 g Natrium und 10 ml Ethanol) langsam unter Rühren zugetropft. Nach 2 Stunden Rühren wurde die Mischung zur Trockene eingedampft. Der Rückstand wurde mit Dichlormethan extrahiert und zur Trockene eingedampft. Nach der Zugabe von n-Hexan wurde ein farbloses Pulver erhalten. Es wurden 0,581 g eines Platinkomplexes der nachfolgenden Formel erhalten:

[(COD)Pt(C≡C-^{t}Bu)₂]

### Herstellung des Katalysators 3

Eine Suspension von 0,48 g [PtCl₂(COD)] in 30 ml Methanol wurde unter Stickstoff auf -30°C gekühlt. Anschließend wurde eine frisch hergestellte Lösung von 0,35 g 1-Ethinyl-1-cyclohexanol und 10,6 ml einer circa 0,5 molaren Natriummethanolat-Lösung in Methanol (käuflich erhältlich bei Aldrich GmbH, Deutschland) langsam unter Rühren zugetropft. Nach 2 Stunden Rühren bei -20°C bis -15°C wurde die Lösung mit 10 ml Wasser versetzt, wodurch ein voluminöser Niederschlag erhalten wurde. Dieser wurde durch Filtrieren mit einer Glasfritte isoliert, mit 10 ml Wasser und 10 ml Diethylether gewaschen und 1,5 Stunden im Vakuum (circa 0,1 mbar) bei Raumtemperatur getrocknet. Es wurden 0,642 g eines Platinkomplexes der nachfolgenden Formel erhalten:

{(COD)Pt[C≡CC₆H₁₀(OH)]₂}

### Herstellung des Katalysators 4

Die oben für die Herstellung von Katalysator 2 beschriebene Verfahrensweise wird wiederholt mit der Abänderung, daß anstelle von 0,28 g ^{t}Bu-C≡C-H 0,28 g 1-Hexin eingesetzt wurden. Es wurden 0,572 g des Platinkomplexes der nachfolgenden Formel erhalten:

[(COD)Pt(C≡C-CH₂-CH₂-CH₂-CH₃)₂]

### Herstellung des Katalysators 5

Die oben für die Herstellung von Katalysator 1 beschriebene Verfahrensweise wird wiederholt mit der Abänderung, daß anstelle von 0,5 g [PtCl₂(COD)] 0,54 g [PtCl₂(Me₂COD)] eingesetzt wurden. Es wurden 0,377 g des Platinkomplexes der nachfolgenden Formel erhalten:

[(Me₂COD)Pt(C≡C-Ph)₂]

### Herstellung des Katalysators 6

Eine Suspension von 0,48 g [PtCl₂(COD)] in 30 ml Methanol wurde unter Stickstoff auf -67°C gekühlt. Anschließend wurde eine frisch hergestellte Lösung von 0,587 g 1,1-Diphenyl-2-propin-1-ol und 10,6 ml einer circa 0,5 molaren Natriummethanolat-Lösung in Methanol langsam unter Rühren zugetropft. Nach 1 Stunde Rühren wurde innerhalb von 1 Stunde auf -10°C aufgetaut, mit 0,34 ml Trimethylsilylchlorid versetzt und 5 Minuten gerührt. Der Niederschlag wurde über eine Glasfritte abfiltriert und mit 5 ml Methanol gewaschen und bei Raumtemperatur 1,5 Stunden im Vakuum bei 0,1 mbar getrocknet. Es wurden 0,593 g des Platinkomplexes der nachfolgenden Formel erhalten:

{(COD)Pt[C≡CCPh₂(OCH₃)]₂}

### Herstellung des Katalysators 7

Eine Suspension von 0,48 g [PtCl₂(COD)] in 15 ml Methanol wurde unter Stickstoff auf -10°C gekühlt. Anschließend wurde eine frisch hergestellte Lösung von 0,587 g 1,1-Diphenyl-2-propin-1-ol und 10,6 ml einer circa 0,5 molaren Natriummethanolat-Lösung in Methanol langsam unter Rühren zugetropft. Nach 5 Minuten Rühren wurde die Lösung auf Raumtemperatur aufgetaut und 45 Minuten gerührt. Der Niederschlag wurde über eine Glasfritte abfiltriert und mit 6 ml Methanol gewaschen und bei Raumtemperatur 2 Stunden im Vakuum bei 0,1 mbar getrocknet. Es wurden 0,788 g des Platinkomplexes der nachfolgenden Formel erhalten:

{(COD) Pt [C≡CCPh₂ (OCH₃)]₂}

### Beispiel 1

50,0 g eines Vinyldimethylsiloxy-terminierten Polydimethylsiloxans mit einer Viskosität von 20 Pa s, 3 mg 1-Ethinyl-1-cyclohexanol und 1,0 g SiH-Vernetzer wurden mit Hilfe eines Rührers der Firma Janke & Kunkel IKA-Labortechnik, TYP RE 162 homogen vermischt, wobei der SiH-Vernetzer ein Mischpolymerisat aus Di-methylsiloxy- und Methylhydrogensiloxy- und Trimethylsiloxy-Einheiten mit einer Viskosität von 330 mPa s und einem Gehalt an Si-gebundenem Wasserstoff von 0,46 Gew.-% war. Anschließend wurden 1,3 mg (das entspricht einem Gehalt von 10 ppm Pt bezogen auf die Gesamtmasse) Katalysator 1, dessen Herstellung oben beschrieben ist - in 0,5 ml Methylenchlorid gelöst - bei Raumtemperatur eingerührt.

### Beispiel 2

Die in Beispiel 1 beschriebene Verfahrensweise wird wiederholt mit der Abänderung, daß anstelle von 3 mg Ethinylcyclohexanol 30 mg Ethinylcyclohexanol eingerührt wurden.

### Beispiel 3

Die in Beispiel 1 beschriebene Verfahrensweise wird wiederholt mit der Abänderung, daß vor der Katalysatorzugabe 35 mg 2-Phenyl-3-butin-2-ol (käuflich erhältlich bei Aldrich GmbH & Co KG, Deutschland) anstelle des Ethinylcyclohexanols eingerührt wurden.

### Vergleichsbeispiel 1

Die in Beispiel 2 beschriebene Verfahrensweise wird wiederholt mit der Abänderung, daß anstelle von Katalysator 1 10 ppm Platin als Platin-Divinyltetramethyldisiloxan-Komplex in Vinyl-terminiertem Polydimethylsiloxan (käuflich erhältlich bei ABCR GmbH & Co, Deutschland) verwendet wurden.

### Beispiel 4

Die in Beispiel 2 beschriebene Verfahrensweise wird wiederholt mit der Abänderung, daß anstelle von Katalysator 1 1,2 mg Katalysator 2, dessen Herstellung oben beschrieben ist, (entspricht einem Gehalt von 10 ppm Platin bezogen auf die gesamte Siliconmasse) eingemischt wurden.

### Beispiel 5

Die in Beispiel 2 beschriebene Verfahrensweise wird wiederholt mit der Abänderung, daß anstelle von Katalysator 1 1,4 mg Katalysator 3, dessen Herstellung oben beschrieben ist, (entspricht einem Gehalt von 10 ppm Platin bezogen auf die gesamte Siliconmasse) eingemischt wurden.

### Beispiel 6

Die in Beispiel 2 beschriebene Verfahrensweise wird wiederholt mit der Abänderung, daß anstelle von Katalysator 1 1,2 mg Katalysator 4, dessen Herstellung oben beschrieben ist, (entspricht einem Gehalt von 10 ppm Platin bezogen auf die gesamte Siliconmasse) eingemischt wurden.

### Beispiel 7

Die in Beispiel 2 beschriebene Verfahrensweise wird wiederholt mit der Abänderung, daß anstelle von Katalysator 1 1,4 mg Katalysator 5, dessen Herstellung oben beschrieben ist, (entspricht einem Gehalt von 10 ppm Platin bezogen auf die gesamte Siliconmasse) eingemischt wurden.

### Beispiel 8

In einem Laborkneter wurden 255 Masseteile eines Vinyldimethylsiloxy-terminierten Polydimethylsiloxans mit einer Viskosität von 20 Pa·s vorgelegt, auf 150°C aufgeheizt und mit 180 Masseteilen einer hydrophoben pyrogenen Kieselsäure mit einer spezifischen Oberfläche nach BET von 300 m²/g und einem Kohlenstoffgehalt von 3,95 Gew.-%, versetzt. Es entstand eine hochviskose Masse, die anschließend mit 165 Masseteile des obengenannten Polydimethylsiloxans verdünnt wurde. Durch Kneten unter Vakuum (10 mbar) bei 150°C wurden während einer Stunde flüchtige Bestandteile entfernt.

488,1 g der so hergestellten Grundmasse wurden auf einer Walze bei einer Temperatur von 25°C mit 0,160 g Inhibitor, 10,95 g SiH-Vernetzer und 2,0 g Katalysatorbatch zu einer homogenen Masse vermischt, wobei der Inhibitor 1-Ethinyl-1-cyclohexanol war, der SiH-Vernetzer ein Mischpolymerisat aus Dimethylsiloxy- und Methylhydrogensiloxy- und Trimethylsiloxy-Einheiten mit einer Viskosität von 320 mPa s und einem Gehalt an Si-gebundenem Wasserstoff von 0,48 Gew.-% war, und der Katalysatorbatch eine Mischung aus obengenanntem Vinylpolydimethylsiloxan und Katalysator 1, dessen Herstellung oben beschrieben ist, (2,5 ppm Platin-Gehalt bezogen auf die gesamte Masse) war.

### Vergleichsbeispiel 2

Die in Beispiel 8 beschriebene Arbeitsweise wird wiederholt mit der Abänderung daß als Katalysator 8 ppm Platin als Platin-Divinyltetramethyldisiloxan-Komplex in Vinyl-terminiertem Polydimethylsiloxan (käuflich erhältlich bei ABCR GmbH & Co, Deutschland) verwendet wurde.

### Beispiel 9

589,4 Masseteile eines Vinyldimethylsiloxy-terminierten Polydimethylsiloxans mit einer Brabender-Plastizität von 630 mkp entsprechend einer mittleren Molmasse von circa 500000 g/mol wurden mit 252,6 Masseteile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

500 g der so erhaltenen Grundmasse wurden auf einer Walze bei einer Temperatur von 20°C mit 0,1 g Inhibitor, 7,5 g SiH-Vernetzer und 6,5 mg Katalysator 1, in 1 ml Dichlormethan gelöst, zu einer homogenen Masse vermischt, wobei als Inhibitor 1-Ethinyl-1-cyclohexanol eingesetzt wurde, und der SiH-Vernetzer ein Mischpolymerisat aus Dimethylsiloxy- und Methylhydrogensiloxy- und Trimethylsiloxy-Einheiten mit einer Viskosität von 310 mPa·s bei 25°C und einem Gehalt an Si-gebundenem Wasserstoff von 0,46 Gew.-% war.

### Beispiel 10

Die in Beispiel 8 beschriebene Verfahrensweise wird wiederholt mit der Abänderung, daß als Katalysator 5 ppm Platin als Platinkomplex 3 - in 0,5 ml Dichlormethan gelöst - verwendet wurde.

### Beispiel 11

Die in Beispiel 9 beschriebene Verfahrensweise wird wiederholt mit der Abänderung, daß als Katalysator 5 ppm Platin als Platinkomplex 3 -in 0,5 ml Dichlormethan gelöst - verwendet wurde.

### Beispiel 12

Die thermischen Härtungseigenschaften der in den Beispielen 1, 2, 3, 4, 5, 6, 7, 13 und 14 sowie Vergleichsbeispiel 1 (Vl) hergestellten Siliconmassen wurden mit einem Dynamic Analyzer RDA II, der Fa. Rheometrics mit einer Aufheizkurve von 30 bis 200°C und mit einer Heizrate von 5°C/Minute gemessen. Zur quantitativen Ermittlung der Lagerbarkeit wurden die hergestellten Formulierungen bei Raumtemperatur (RT) und 50°C gelagert, wobei die Zeitdauer (gemessen in Tagen) bis zur Verdoppelung des Anfangswertes der Viskosität ermittelt wurde. Die Meßergebnisse werden in Tabelle 1 dargestellt.

Die thermischen Härtungseigenschaften der in den Beispielen 8, 9, 10 und 11 sowie Vergleichsbeispiel 2 (V2) hergestellten Siliconmassen wurden mit einem Goettfert-Elastograph gemessen. Zur quantitativen Ermittlung der Lagerbarkeit wurden die hergestellten Formulierungen bei Raumtemperatur (RT) und 50°C gelagert, wobei die Zeitdauer (gemessen in Tagen) bis zur Verdoppelung des Anfangswertes der Viskosität ermittelt wurde. Die Meßergebnisse werden in Tabelle 2 dargestellt.

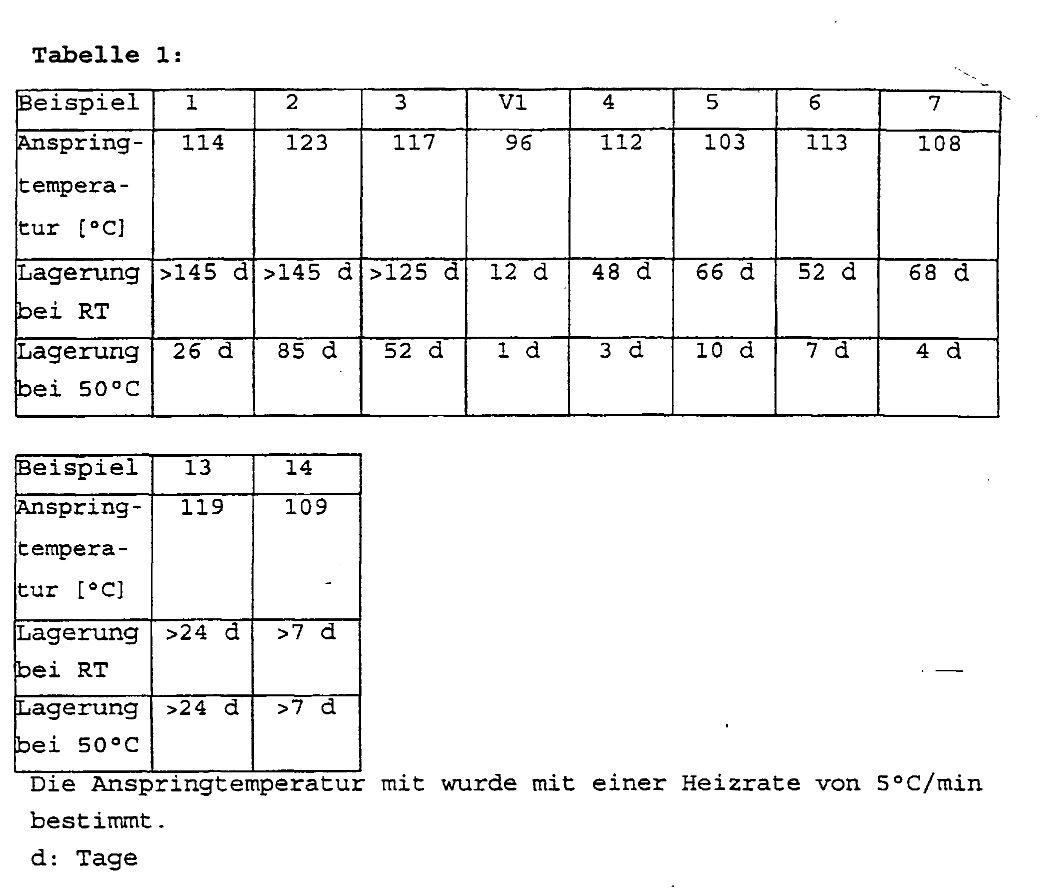

**Tabelle 2:**

| Beispiele | 8 | V2 | 9 | 10 | 11 |
|---|---|---|---|---|---|
| a_{T} [°C] | 125 | 116 | 122 | 120 | 119 |
| t₉₀ [s] | 32 | 25 | 27 | 28 | 25 |
| Lagerung bei RT | >136 d | 15 d | >125 d | >59 d | >59 d |
| Lagerung bei 50°C | 28 d | 3 d | 25 d | 8 d | 14 d |

| | | | | | |
|---|---|---|---|---|---|
| d: Tage | | | | | |
| s: Sekunden | | | | | |

Die Anspringtemperatur a_{T} wurde mit einer Heizrate von 10°C/min bestimmt. Die Temperatur, die dem 4%-Wert des maximalen Drehmomentes entspricht, wurde als Anspringtemperatur definiert.

Die Bestimmung des t₉₀-Wertes erfolgte nach DIN 53529 T3. Die Dauer vom Beginn der Härtung bis 90% (t₉₀-Wert) des maximalen Drehmoments wurde dabei bei 180°C ermittelt.

Zum weiteren Vergleich wurden von einigen Siliconmassen sofort nach der Herstellung und nach einmonatiger Lagerung der Massen bei Raumtemperatur vernetzte Siliconkautschuk-Folien hergestellt und die mechanischen Eigenschaften bestimmt. Die Herstellung der vernetzten Siliconkautschuke erfolgte dadurch, daß die Mischung des jeweiligen Beispiels in einer hydraulischen Presse bei einer Temperatur von 170°C während 10 Minuten zum Siliconkautschuk vernetzt wurde. Die entformten ca. 2 mm bzw. 6 mm dicken Siliconkautschukfolien wurden mechanischen Prüfungen unterworfen.
Das Ergebnis kann Tabelle 3 entnommen werden.

**Tabelle 3:**

| sofort nach der Herstellung | Härte [Shore A] | RF[N/mm²] | RD [%] | WRW [N/mm] | RP [%] |
|---|---|---|---|---|---|
| Beispiel 8 | 52 | 10,1 | 590 | 32,1 | 62 |
| Vergleich V2 | 50 | 10,7 | 620 | 28,2 | 58 |
| Beispiel 10 | 49 | 10,3 | 600 | 28,9 | 60 |
| Beispiel 9 | 37 | 13,0 | 1140 | 50,0 | 49 |
| Beispiel 11 | 38 | 12,7 | 1070 | 50,9 | 49 |
| Eigenschaften nach einmonatiger Lagerung | | | | | |
| Beispiel 8 | 50 | 9,5 | 570 | 30,7 | 64 |
| Vergleich V2 | *) | *) | *) | *) | *) |
| Beispiel 10 | 51 | 9,9 | 630 | 29,4 | 63 |
| Beispiel 9 | 35 | 12,3 | 1180 | 48,5 | 49 |
| Beispiel 11 | 39 | 13,1 | 1090 | 46,9 | 45 |

| | | | | | |
|---|---|---|---|---|---|
| *): nach 15 d gehärtet | | | | | |
| Härte: Shore-A-Härte wurde bestimmt gemäß DIN 53505, | | | | | |
| RF: Reißfestigkeit wurde bestimmt gemäß DIN 53504-S1 | | | | | |
| RD: Reißdehnung wurde bestimmt gemäß DIN 53504-S1 | | | | | |
| WRW: Weiterreißwiderstand wurde bestimmt gemäß ASTM D 624 | | | | | |
| RP: Rückprallelastizität wurde bestimmt gemäß DIN 53512 | | | | | |

Wie aus Tabelle 3 ersichtlich ist, wird die Mechanik durch einmonatige Lagerung kaum verändert.

### Beispiel 13

Die in Beispiel 2 beschriebene Verfahrensweise wird wiederholt mit der Abänderung, daß anstelle des Katalysators 1 1,9 mg Kalalysator 6 eingerührt wurden.

### Beispiel 14

Die in Beispiel 2 beschriebene Verfahrensweise wird wiederholt mit der Abänderung, daß anstelle des Katalysators 1 1,8 mg Kalalysator 7 eingerührt wurden.

## Patentansprüche

1. Härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus 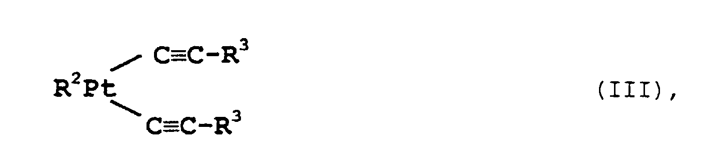 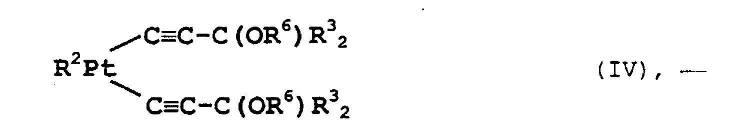 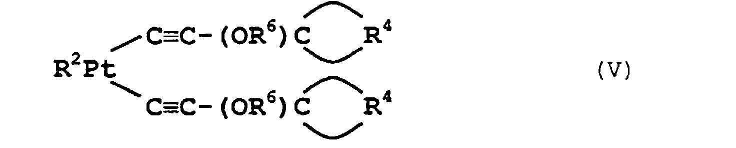 und
H-C≡C-(R⁵)_{f}-C≡C-[-Pt(R²)-C≡C-(R⁵)_{f}-C≡C-]ₑ-H (VI),
wobei
**R**^{**2**} ein gegebenenfalls substituiertes Dien bedeutet, das durch mindestens eine π-Bindung mit Platin verbunden ist und eine unverzweigte oder eine verzweigte Kette mit 4 bis 12 Kohlenstoffatomen oder einen cyclischen Ring mit 6 bis 18 Kohlenstoffatomen darstellt,
**R**^{**3**} gleich oder verschieden sein kann und Wasserstoffatom, Halogenatom oder einwertige, gegebenenfalls mit Halogenatomen oder Cyanoresten substituierte Kohlenwasserstoffreste mit 1 bis 24 Kohlenstoffatomen bedeutet,
**R**^{**4**} gleiche oder verschiedene zweiwertige, gegebenenfalls substituierte Kohlenwasserstoffreste mit 1 bis 24 Kohlenstoffatomen bedeutet,
**R**^{**5**} gleich oder verschieden sein kann und zweiwertige, gegebenenfalls substituierte Kohlenwasserstoffreste mit 1 bis 12 Kohlenstoffatomen, Silanreste oder Siloxanreste bedeutet,
**R**^{**6**} gleich oder verschieden sein kann und Wasserstoffatom oder einen einwertigen Kohlenwasserstoffrest mit 1 bis 20 Kohlenstoffatomen ist,
e eine ganze Zahl größer oder gleich 1 bedeutet und
f 0 oder 1 ist.

2. Härtbare Organopolysiloxanmassen gemäß Anspruch 1, dadurch gekennzeichnet, daß es sich bei Bestandteil (A) um eine aliphatisch ungesättigte Organosiliciumverbindung handelt.

3. Härtbare Organopolysiloxanmassen gemäß Anspruch 1 oder 2, dadurch gekennzeichnet, daß als Organosiliciumverbindung (A), lineare oder verzweigte Organopolysiloxane aus Einheiten der Formel
RₐR¹ _{b}SiO_{(4-a-b) /2} (I)
eingesetzt werden, wobei
R gleich oder verschieden sein kann und einen einwertigen, von aliphatischen Kohlenstoff-Kohlenstoff-Mehrfachbindungen freien, organischen Rest,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, daß die Summe a + b kleiner oder gleich 3 ist und mindestens 2 Reste R¹ je Molekül vorliegen.

4. Härtbare Organopolysiloxanmassen gemäß einem oder mehreren der Ansprüche 1 bis 3, dadurch gekennzeichnet, daß es sich bei Rest R um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen handelt.

5. Härtbare Organopolysiloxanmassen gemäß einem oder mehreren der Ansprüche 1 bis 4, dadurch gekennzeichnet, daß als Organopolysiloxane (B) lineare, cyclische oder verzweigte Organopolysiloxane aus Einheiten der Formel
R_{c}H_{d}SiO_{(4-c-d)/2} (II)
eingesetzt werden, wobei
R gleich oder verschieden sein kann und die oben angegebene Bedeutung hat,
c 0, 1, 2 oder 3 ist und
d 0, 1 oder 2 ist,
mit der Maßgabe, daß die Summe von c + d kleiner oder gleich 3 ist und mindestens zwei Si-gebundene Wasserstoffatome je Molekül vorliegen.

6. Härtbare Organopolysiloxanmassen gemäß einem oder mehreren der Ansprüche 1 bis 5, dadurch gekennzeichnet, daß als Katalysator (D) Bis (alkinyl) (1,5-cyclooctadien) platin-, Bis(alkinyl)-(1,5-dimethyl-1,5-cyclooctadien)platin- oder Bis (alkinyl) (1,6-dimethyl-1,5-cyclooctadien)platin-Komplexe eingesetzt werden.

7. Platinkatalysatoren der Formel (III) mit R² gleich 1,5-Cyclooctadien, 1,5-Dimethyl-1,5-Cyclooctadien oder 1,6-Dimethyl-1,5-Cyclooctadien, mit der Maßgabe, daß im Fall von R² gleich 1,5-Cyclooctadien R³ die Bedeutung von -C (R⁷) =CR⁷₂ hat, wobei R⁷ gleich oder verschieden sein kann und Wasserstoffatom, Halogenatom oder einwertige, gegebenenfalls mit Halogenatomen oder Cyanoresten substituierte Kohlenwasserstoffreste mit 1 bis 21 Kohlenstoffatomen bedeutet.

8. Platinkatalysatoren der Formeln (IV), (V) und (VI) mit R² gleich 1,5-Cyclooctadien, 1,5-Dimethyl-1,5-Cyclooctadien oder 1,6-Dimethyl-1,5-Cyclooctadien.

9. Formkörper hergestellt durch Vernetzung der erfindungsgemäßen Massen gemäß einem oder mehreren der Ansprüche 1 bis 6.

## Claims

1. A curable organopolysiloxane composition comprising
(A) compounds which have radicals having aliphatic carbon-carbon multiple bonds,
(B) organopolysiloxanes having Si-bonded hydrogen atoms, or, instead of (A) and (B),
(C) organopolysiloxanes which have SiC-bonded radicals having aliphatic carbon-carbon multiple bonds and Si-bonded hydrogen atoms, and
(D) a platinum catalyst selected from the class consisting of 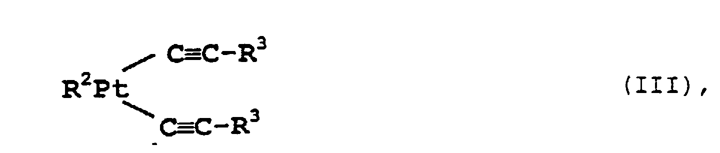 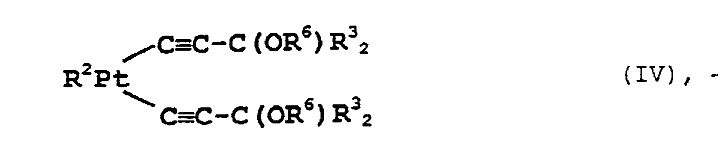 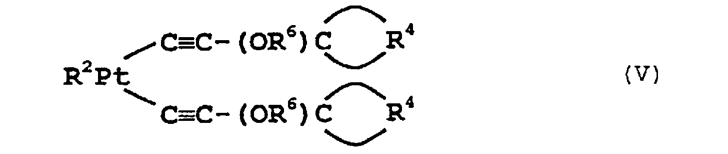 and
H-C≡C-(R⁵)_{f}-C≡C-[-Pt (R²)-C≡C-(R⁵)_{f}-C≡C-]ₑ-H (VI),
where
R² is an unsubstituted or substituted diene bonded to platinum via at least one π bond, being an unbranched or branched chain having from 4 to 12 carbon atoms or a ring having from 6 to 18 carbon atoms,
R³ are identical or different and are a hydrogen atom, halogen atom or a monovalent, unsubstituted or halogen- or cyano-substituted hydrocarbon radical having from 1 to 24 carbon atoms,
R⁴ are identical or different bivalent, unsubstituted or substituted, hydrocarbon radicals having from 1 to 24 carbon atoms,
R⁵ are identical or different and are bivalent, unsubstituted or substituted, hydrocarbon radicals having from 1 to 12 carbon atoms, silane radicals or siloxane radicals,
R⁶ are identical or different and are a hydrogen atom or a monovalent hydrocarbon radical having from 1 to 20 carbon atoms,
e is an integer greater than or equal to 1, and
f is 0 or 1.

2. A curable polyorganosiloxane composition as claimed in claim 1, wherein constituent (A) is an aliphatically unsaturated organosilicon compound.

3. A curable organopolysiloxane composition as claimed in claim 1 or 2, wherein the organosilicon compound (A) used comprises linear or branched organopolysiloxanes composed of units of the formula
RₐR¹ _{b}SiO_{(4-a-b)/2} (I)
where
R are identical or different and are a monovalent organic radical free from aliphatic carbon-carbon multiple bonds,
R¹ are identical or different and are a monovalent, unsubstituted or substituted, SiC-bonded hydrocarbon radical having an aliphatic carbon-carbon multiple bond,
a is 0, 1, 2 or 3, and
b is 0, 1 or 2,
with the proviso that the sum of a and b is less than or equal to 3 and at least 2 radicals R¹ are present in each molecule.

4. A curable organopolysiloxane composition as claimed in one or more of claims 1 to 3, wherein radical R is a monovalent SiC-bonded hydrocarbon radical having from 1 to 6 carbon atoms and free from aliphatic carbon-carbon multiple bonds.

5. A curable organopolysiloxane composition as claimed in one or more of claims 1 to 4, wherein the organopolysiloxanes (B) used comprise linear, cyclic or branched organopolysiloxanes composed of units of the formula
R_{c}H_{d}SiO_{(4-c-d)/2} (II)
where
R are identical or different and are as defined above,
c is 0, 1, 2 or 3, and
d is 0, 1 or 2,
with the proviso that the sum of c and d is less than or equal to 3 and at least two Si-bonded hydrogen atoms are present in each molecule.

6. A curable organopolysiloxane composition as claimed in one or more of claims 1 to 5, wherein the catalyst (D) used comprises bis(alkynyl) (1,5-cyclooctadiene)platinum complexes, bis (alkynyl) (1,5-dimethyl-1,5-cyclooctadiene)platinum complexes or bis (alkynyl) (1, 6-dimethyl-1,5-cyclooctadiene)platinum complexes.

7. A platinum catalyst of the formula (III) in which R² is 1,5-cyclooctadiene, 1,5-dimethyl-1,5-cyclooctadiene or 1, 6-dimethyl-1,5-cyclooctadiene, with the proviso that if R² is 1,5-cyclooctadiene R³ is -C(R⁷)=CR⁷₂, where R⁷ are identical or different and are a hydrogen atom, halogen atom or a monovalent, unsubstituted or halogen- or cyano-substituted, hydrocarbon radical having from 1 to 21 carbon atoms.

8. A platinum catalyst of the formulae (IV), (V) and (VI) in which R² is 1,5-cyclooctadiene, 1,5-dimethyl-1,5-cyclooctadiene or 1,6-dimethyl-1,5-cyclooctadiene.

9. A molding produced by crosslinking the novel composition as claimed in one or more of claims 1 to 6.

## Revendications

1. Composition d'organopolysiloxanes durcissables, contenant
(A) des composés qui présentent des radicaux avec des liaisons multiples aliphatiques carbone-carbone
(B) des organopolysiloxanes, qui présentent des atomes d'hydrogène liés à Si ou, au lieu de (A) et (B),
(C) des organopolysiloxanes, qui présentent des radicaux liés à SiC avec des liaisons multiples aliphatiques carbone-carbone et des atomes d'hydrogène liés à Si, et
(D) un catalyseur de platine, choisi parmi le groupe constitué de 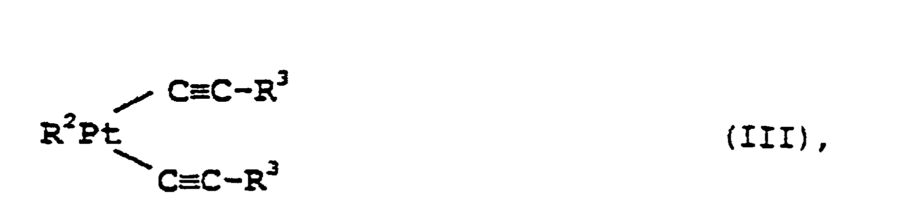 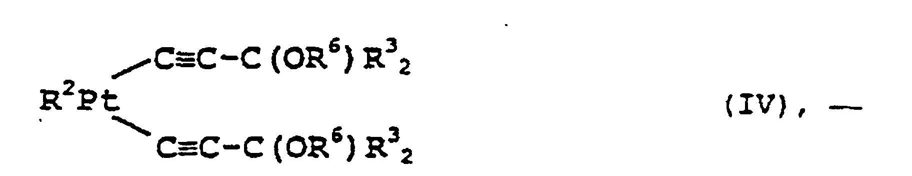 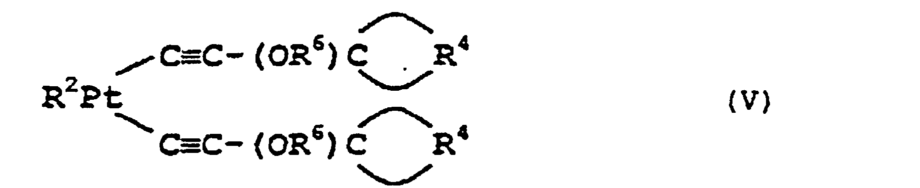 et
H-C≡C-(R⁵)_{f}-C≡C-[-Pt(R²)-C≡C-(R⁵)_{f}-C≡C-]ₑ-H (VI),
où
R² signifie un diène éventuellement substitué, qui est lié au platine par au moins une liaison π et qui représente une chaîne non ramifiée ou ramifiée comprenant 4 à 12 atomes de carbone ou un noyau cyclique comprenant 6 à 18 atomes de carbone,
R³ peut être identique ou différent et signifie un atome d'hydrogène, un atome d'halogène ou des radicaux hydrocarbonés, comprenant 1 à 24 atomes de carbone, monovalents, éventuellement substitués par des atomes d'halogène ou par des radicaux cyano,
R⁴ signifie des radicaux hydrocarbonés identiques ou différents, divalents, éventuellement substitués, comprenant 1 à 24 atomes de carbone,
R⁵ peut être identique ou différent et signifie des radicaux hydrocarbonés divalents, éventuellement substitués, comprenant 1 à 12 atomes de carbone, des radicaux silane ou des radicaux siloxane,
R⁶ peut être identique ou différent et représente l'atome d'hydrogène ou un radical hydrocarboné monovalent comprenant 1 à 20 atomes de carbone,
e signifie un nombre entier supérieur ou égal à 1 et
f est égal à 0 ou 1.

2. Compositions d'organopolysiloxanes durcissables selon la revendication 1, caractérisées en ce qu'il s'agit, pour le composant (A), d'un composé organosilicié aliphatiquement insaturé.

3. Compositions d'organopolysiloxanes durcissables selon la revendication 1 ou 2, caractérisées en ce qu'on utilise comme composé organosilicié (A), des organopolysiloxanes linéaires ou ramifiés constitués d'unités de formule
RₐR¹ _{b}SiO_{(4-a-b)/2} (I)
où
R peut être identique ou différent et signifie un radical organique monovalent, exempt de liaisons multiples aliphatiques carbone-carbone,
R¹ peut être identique ou différent et signifie un radical hydrocarboné monovalent, éventuellement substitué, lié à SiC, avec une liaison multiple aliphatique carbone-carbone,
a est égal à 0, 1, 2 ou 3 et
b est égal à 0, 1 ou 2,
sous réserve que la somme a+b soit inférieure ou égale à 3 et qu'au moins deux radicaux R¹ soient présents par molécule.

4. Compositions d'organopolysiloxanes durcissables selon l'une ou plusieurs des revendications 1 à 3, caractérisées en ce qu'il s'agit, pour le radical R, d'un radical hydrocarboné monovalent, exempt de liaisons multiples aliphatiques carbone-carbone, lié à SiC, comprenant 1 à 6 atomes de carbone.

5. Compositions d'organopolysiloxanes durcissables selon l'une ou plusieurs des revendications 1 à 4, caractérisées en ce qu'on utilise comme organopolysiloxanes (B) des organopolysiloxanes linéaires, cycliques ou ramifiés constitués de motifs de formule
R_{c}H_{d}SiO_{(4-c-d)/2} (II)
où
R peut être identique ou différent et présente la signification susmentionnée,
c est égal à 0, 1, 2 ou 3 et
d est égal à 0, 1 ou 2,
sous réserve que la somme c+d soit inférieure ou égale à 3 et qu'au moins deux atomes d'hydrogène liés à Si soient présents par molécule.

6. Compositions d'organopolysiloxanes durcissables selon l'une ou plusieurs des revendications 1 à 5, caractérisées en ce qu'on utilise comme catalyseur (D), des complexes de bis(alcynyl)(1,5-cyclooctadiène)platine, bis(alcynyl)(1,5-diméthyl-1,5-cyclooctadiène)platine ou bis(alcynyl) (1,6-diméthyl-1,5-cyclooctadiène)platine.

7. Catalyseurs de platine de formule (III), dans laquelle R² est égal à 1,5-cyclooctadiène, 1,5-diméthyl-1,5-cyclooctadiène ou 1,6-diméthyl-1,5-cyclooctadiène, sous réserve que, lorsque R² est égal à 1,5-cyclooctadiène, R³ ait la signification -C(R⁷)=CR⁷₂, où R⁷ peut être identique ou différent et signifie un atome d'hydrogène, un atome d'halogène ou des radicaux hydrocarbonés comprenant 1 à 21 atomes de carbone, monovalents, éventuellement substitués par des atomes d'halogène ou par des radicaux cyano.

8. Catalyseurs de platine selon les formules (IV), (V) et (VI), avec R² égal à 1,5-cyclooctadiène, 1,5-diméthyl-1,5-cyclooctadiène ou 1,6-diméthyl-1,5-cyclooctadiène.

9. Corps moulés fabriqués par réticulation des compositions selon l'invention, selon l'une ou plusieurs des revendications 1 à 6.
